# EUROPEAN PATENT APPLICATION

(11) **EP 3 388 719 A1**
(43) Date of publication of application: **17.10.2018**
(21) Application number: 18161132.8
(22) Date of filing: 12.03.2018
(51) Int. Cl.: F16J 15/34, F01D 5/02, F01D 11/00, F16J 15/44

(54) **REDUCED FRICTION INTERSHAFT SEAL ASSEMBLY**

(30) Priority: 10.04.2017 US 201715483936
(71) Applicant: Rolls-Royce Corporation, Indianapolis, Indiana 46225 (US)
(72) Inventor: Munson, John, Indianapolis, IN Indiana 46260 (US); Black, Joseph, Brownsburg, IN Indiana 46112 (US)
(74) Representative: Rolls-Royce plc

(57) **Abstract**

An intershaft seal assembly (10) comprises an annular seal ring (12) disposed between a pair of annular runners (16) connected to a co-axial inner rotating shaft (20) and a surface of a hollow outer rotating shaft (22). The centrifugal force resulting from rotation of the co-axial inner rotating shaft effects engagement of the annular seal ring with the surface of the hollow outer rotating shaft. The surface may be a radially-inward-facing surface of a retaining arm connected to the hollow outer rotating shaft. A lubricious coating (41) is applied to one or more of the interfaces (17, 25, 27) between the seal ring and adjacent components such as the runners and the retaining arm (14). The lubricious coating may maintain the coefficient of friction between the interfaces between the seal ring and adjacent components below 0.4 at the maximum rotational speed of the seal ring.

## Description

### FIELD OF THE DISCLOSURE

The present disclosure relates generally to turbine machines, and more specifically to intershaft seal assemblies used in gas turbine engines.

### BACKGROUND

Intershaft seals and intershaft seal assemblies may be used to isolate spaces between shafts in turbine engines having co-axial shafts. In one common design, a first shaft connects a fan, a first stage compressor, and a second stage turbine while a second shaft connects a second stage compressor and first stage turbine. The first shaft rotates at a relatively lower speed than the second shaft. The first and second shafts are co-axial and may be either co- or counter-rotational. To be effective, an intershaft seal must therefore isolate spaces between the shafts having potentially high differential rotational speeds, and the spaces may also have a potentially high differential pressure.

Intershaft seals are used in turbine engines which provide energy for a wide range of uses. Examples of turbine engines include turbofan, turbojet, turboshaft, and turboprop engines. As just one example of the wide range of applications such engines are suitable for, gas turbine engines are used to provide propulsion to an aircraft.

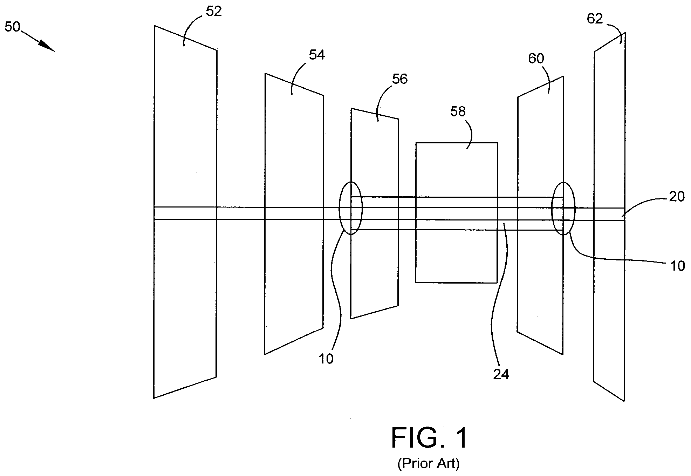

A typical gas turbine engine comprises an inlet fan, a compressor, a combustor, a high-pressure turbine, and a low-pressure turbine. As one example of a typical dual-shaft gas turbine engine 50, Figure 1 illustrates a first shaft 20 which connects a fan 52, first stage compressor 54, and second stage turbine 62. A second shaft 24 is hollow and is concentrically located around first shaft 20 and connects a second stage compressor 56 with a first stage turbine 60. A combustor 58 is disposed between second stage compressor 56 and first stage turbine 60. First shaft 20 is radially inward from second shaft 24 and rotates at a relatively lower speed. Intershaft seal assemblies 10 are used at least at each axial terminus of outer shaft 22 to seal the spaces between the two concentric shafts 24, 20.

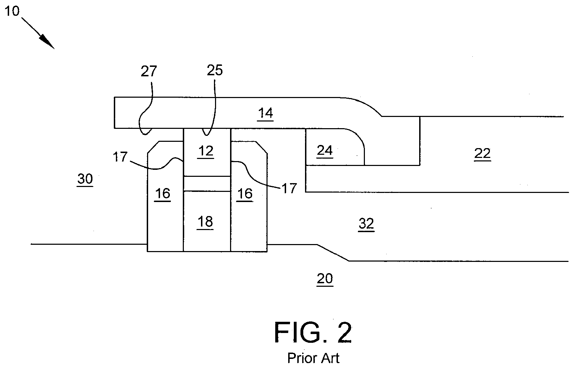

One design for an intershaft seal involves the use of a seal ring which is sometimes referred to in the art as a piston ring. Figure 2 illustrates a seal ring design for a prior art intershaft seal. Intershaft seal assembly 10 comprises a seal ring 12 in contact with an annular retaining arm 14. The seal ring 12 is disposed between a pair of runners 16 (or retaining rings) which are spaced apart by a spacer 18 and coupled to an inner shaft 20. Retaining arm 14 is coupled to a hollow outer shaft 22 and may be held in place by a retention member 24. Inner shaft 20 and outer shaft 22 can be co- or counter-rotational. Seal assembly 10 serves to isolate high pressure fluid cavity 30 from a lower pressure fluid cavity 32.

When inner shaft 20 and outer shaft 22 are not in motion, a slight gap (not shown) is present between seal ring 12 and retaining arm 14. However, once inner shaft 20 begins to rotate the centrifugal force from rotation will move seal ring 12 radially outward and into contact with retaining arm 14. Typically, seal ring 12 is not a full hoop; as a result, seal ring 12 lacks sufficient strength to resist the deflection caused by centrifugal force and tends to deflect radially outward until contacting retaining arm 14.

Seal ring 12 and runners 16 are initially each rotating in the same direction and at the same rotational speed as inner shaft 20. Once seal ring 12 contacts retaining arm 14, seal ring 12 will begin rotating in the same direction and at substantially the same rotational speed as outer shaft 22. This tends to create a large differential velocity between seal ring 12 and runners 16.

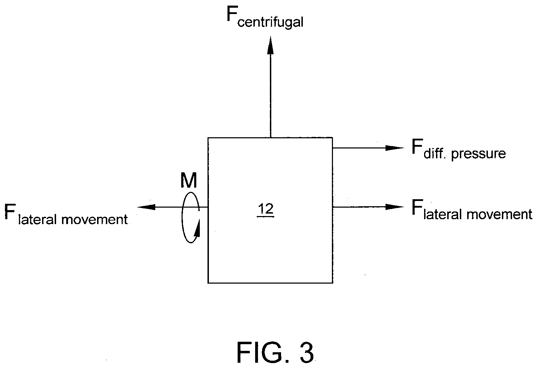

Figure 3 illustrates some of the forces acting on seal ring 12 during operation of the turbine engine (i.e. while inner shaft 20 and outer shaft 22 are rotating). A relatively large centrifugal force (F_{centrifugal}) from rotation of the inner shaft 20 acts on seal ring 12 in a radially outward direction, bringing seal ring 12 into contact with retaining arm 14. An axial differential pressure force (F_{D/P}) acts on seal ring 12 in the vicinity of the pressure boundary in a direction from high pressure fluid cavity 30 to low pressure fluid cavity 32. To form an effective seal, the centrifugal force must be large enough to hold seal ring 12 in contact with retaining arm 14 despite the axial force of differential pressure across the seal ring 12.

Forces caused by relative lateral motion (F_{lateral movement}) between the inner shaft 20 and outer shaft 22 act on seal ring 12 in a direction either axially forward or axially aft. Finally a moment M, sometimes referred to as ring tension, resists radial expansion during rotation of seal ring 12.

The configuration described above with reference to Figures 2 and 3 has drawbacks, including excessive heat generation and a high wear rate of seal ring 12. Thus there is a need in the art for an effective intershaft seal assembly which is better suited to resist heat generation and wear of the seal ring.

### SUMMARY

According to an aspect of the present disclosure, a seal assembly is provided for sealing a high pressure fluid cavity from a low pressure fluid cavity. The cavities are at least partially disposed between a hollow rotating shaft and a co-axial rotating shaft at least partially disposed within the hollow rotating shaft. The seal assembly comprises a pair of annular axially-spaced runners carried by an outer surface of the co-axial rotating shaft, each of the runners having an axially-facing radially-extending side surface opposing an axially-facing radially-extending side surface of the other runner; an annular seal ring positioned axially between the opposing side surfaces of the runners, the annular seal ring having a radially-outward facing surface frictionally engaged with a surface rotating with the hollow rotating shaft; and a lubricious coating disposed between the radially outward facing surface of the annular seal ring and the surface rotating with the hollow rotating shaft to effect a coefficient of friction between the surfaces no greater than 0.4 at the maximum rotational speed of the annular seal ring.

In some embodiments the lubricious coating comprises one or more of graphite, molybdenum disulphate, boron nitride, or PTFE. In some embodiments the seal ring comprises carbon-graphite and the lubricious coating comprises molybdenum disulphate. In some embodiments the seal ring comprises ceramic and the lubricious coating comprises graphite.

In some embodiments the coefficient of friction is no greater than 0.2 at the maximum rotational speed of the annular seal ring. In some embodiments the hollow rotating shaft and the co-axial rotating shaft are counter-rotating. In some embodiments the hollow rotating shaft and the co-axial rotating shaft are co-rotating. In some embodiments the surface rotating with the hollow rotating shaft is a radially-inward-facing surface of an annular retaining arm carried by the hollow rotating shaft.

According to another aspect of the present disclosure, an intershaft seal assembly is disclosed for sealing a high pressure cavity from a low pressure cavity between a first hollow shaft and a second shaft co-axial with and disposed at least partially within the first hollow shaft. The intershaft seal assembly comprises a pair of axially-spaced annular runners carried by the second shaft; an annular seal ring disposed between the runners, the annular seal ring having a radially-outward facing surface coated with a lubricious coating; and a retaining arm carried by the first hollow shaft and having a radially-inward facing surface. The rotation of the second shaft effects engagement of the radially-outward facing surface of the annular seal ring with the radially-inward facing surface of the retaining arm, and wherein a coefficient of friction between the radially-outward facing surface of the annular seal ring and the radially-inward facing surface of the retaining arm does not exceed 0.4 at the maximum rotational speed of the annualar seal ring.

In some embodiments the lubricious coating comprises one or more of graphite, molybdenum disulphate, boron nitride, or PTFE and wherein the seal ring comprises one or more of carbon, carbon-graphite, graphite, or ceramic. In some embodiments the second shaft is connected to at least one of a plurality of fan blades, a plurality of compressor blades, or a plurality of turbine blades. In some embodiments the lubricious coating comprises carbon-graphite and the first hollow shaft comprises steel. In some embodiments the seal ring comprises ceramic, the lubricious coating comprises graphite, and the first hollow shaft comprises steel.

According to yet another aspect of the present disclosure, a method is disclosed for sealing a high pressure fluid cavity from a low pressure fluid cavity. The cavities are at least partially disposed between a hollow rotating shaft and a co-axial rotating shaft at least partially disposed within the hollow rotating shaft. The method comprises rotating the co-axial rotating shaft that carries a pair of annular axially-spaced runners and an annular seal ring disposed axially between the runners to effect engagement of a radially-outward facing surface of the annular seal ring with a surface of the hollow rotating shaft; and disposing a lubricious coating between the radially-outward facing surface and the surface rotating with the hollow rotating shaft such that the coefficient of friction is never greater than 0.4 at the maximum rotational speed of the annular seal ring.

In some embodiments the co-axial rotating shaft is rotated in a first rotational direction and the hollow shaft is rotated in a second rotational direction. In some embodiments the co-axial rotating shaft and the hollow shaft are rotated in the same rotational direction. In some embodiments the lubricious coating is formed of one or more of graphite, molybdenum disulphate, boron nitride, and PTFE.

In some embodiments the seal ring comprises carbon-graphite and the lubricious coating comprises molybdenum disulphate. In some embodiments the seal ring comprises ceramic and the lubricious coating comprises graphite. In some embodiments the coefficient of friction is never greater than 0.2 at the maximum rotational speed of the annular seal ring.

### BRIEF DESCRIPTION OF THE DRAWINGS

The following will be apparent from elements of the figures, which are provided for illustrative purposes and are not necessarily to scale.
Fig. 1 is a schematic diagram of a typical dual-shaft gas turbine engine.
Fig. 2 is a depiction of a prior art intershaft seal assembly.
Fig. 3 is a depiction of some of the forces acting on a seal ring during rotation of the shafts.
Figs. 4A-4E are depictions of an intershaft seal assembly in accordance with some embodiments of the present disclosure.

While the present disclosure is susceptible to various modifications and alternative forms, specific embodiments have been shown by way of example in the drawings and will be described in detail herein. It should be understood, however, that the present disclosure is not intended to be limited to the particular forms disclosed. Rather, the present disclosure is to cover all modifications, equivalents, and alternatives falling within the spirit and scope of the disclosure as defined by the appended claims.

### DETAILED DESCRIPTION

For the purposes of promoting an understanding of the principles of the disclosure, reference will now be made to a number of illustrative embodiments illustrated in the drawings and specific language will be used to describe the same.

The configuration described above with reference to Figures 2 and 3 has drawbacks. Notably, the difference in rotational speeds between inner shaft 20 and outer shaft 22 creates high friction between seal ring 12 (rotating with outer shaft 22) and runners 16 (rotating with inner shaft 20) during transients when the forces caused by relative lateral movement between the shafts overcomes the centrifugal force effecting contact between seal ring 12 and the outer shaft retaining arm 14 thus forcing the seal ring 12 to contact the forward or aft runner 16. This high friction can cause excessive heat generation in the seal assembly 10 as well as a high wear rate of seal ring 12.

Heat generation and wear of the seal ring 12 and runner 16 is proportional to the product of the relative velocity between the two shafts and the pressure change across the seal ring 12. The pressure change is one of either the differential pressure across the seal ring 12 that forces the seal ring 12 against the downstream or low pressure side runner 16, or a relative axial movement between the shafts that results in one of the runners 16 forcing the seal ring 12 to move axially. The force required to move the seal ring 12 axially is dependent on the magnitude of the centrifugal force generated between the seal ring 12 and the outer shaft 22. Multiplying this centrifugal force by the coefficient of friction between the outer surface 25 of seal ring 12 and inner surface 27 of outer shaft 22 provides the magnitude of axial force required to moves seal ring 12 axially to cause friction and wear against the runners 16. In other words, the greater the centrifugal force pushing seal ring 12 against outer shaft 22 and the greater the coefficient of friction between outer surface 25 and inner surface 27, the greater likelihood that unacceptable levels of friction, heat, and wear will be generated between seal ring 12 and runners 16.

Prior art efforts to reduce, minimize, and prevent friction between seal ring 12 and runners 16 have included reducing the mass of seal ring 12 and reducing the angular velocity of the outer shaft 22. Such efforts result in a reduction of the centrifugal force that holds seal ring 12 against outer shaft 22. As an example, some of these efforts are described in U.S. Patent No. 9,051,882. Although these efforts reduced the centrifugal force holding seal ring 12 against outer shaft 22, the centrifugal force remained much greater than required to prevent the force of differential pressure from moving seal ring 12 against a runner 16 on the low pressure side. Thus these efforts still resulted in an excessive centrifugal force.

The present disclosure is thus directed to systems and methods for reducing friction between seal ring 12 and runners 16 by reducing the coefficient of friction between outer surface 25 of seal ring 12 and inner surface 27 of outer shaft 22. Specifically, the present disclosure is directed to the application of a lubricious coating to one or more of: (1) inner surface 27 of outer shaft 22, (2) outer surface 25 of seal ring 12, (3) all surfaces of seal ring 12, and (4) inner facing surfaces 17 of runners 16. In some embodiments, the lubricious coating is applied only to the outer surface 25 of seal ring 12.

In some aspects, this disclosure is directed to an intershaft seal assembly which reduces heat generation and seal ring wear during operation. Detailed descriptions of various embodiments of the disclosed intershaft seal assembly, and additional advantages thereof, are presented below.

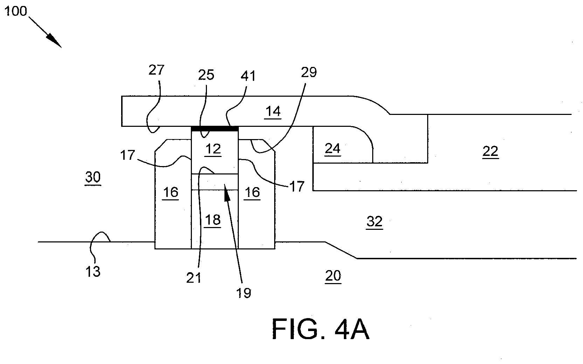

Figures 4A through 4E are depictions of a reduced friction intershaft seal assembly 100 in accordance with some embodiments of the present disclosure. Assembly 100 includes a lubricous coating applied to at least one of the following interfaces: (1) seal ring 12 to outer shaft 22, and (2) seal ring 12 to one or more runners 16.

Assembly 100 comprises a seal ring 12 in contact with an annular retaining arm 14. The seal ring 12 is disposed between a pair of runners 16 (or retaining rings) which are spaced apart by a spacer 18 and coupled to an inner shaft 20. Retaining arm 14 may be coupled to a hollow outer shaft 22 and may be held in place by a retention member 24. Inner shaft 20 and outer shaft 22 can be co- or counter-rotational. Assembly 100 serves to isolate high pressure fluid cavity 30 from a lower pressure fluid cavity 32.

In some embodiments the inner shaft 20 operates at a relatively lower speed (in rotations per minute) than the outer shaft 22.

Annular seal ring 12 is positioned between a pair of annular runners 16. Each runner 16 comprises an axially-facing, radially-extending side surfaces 17. Runners 16 are arranged to create an opposing pair of side surfaces 17, with seal ring 12 positioned between these opposing side faces 17. Runners 16 are connected to an outer surface 13 of first shaft 20.

In some embodiments runners 16 are axially spaced apart by spacer 18. In some embodiments spacer 18 is slightly larger in the axial dimension than seal ring 12 resulting in a small gap between seal ring 12 and runners 16.

In some embodiments a void 19 is present, bounded by seal ring 12, spacer 18, and side surfaces 17. In some embodiments the radial dimension of void 19 is greater than the radial distance between radially-inward facing surface 27 of outer shaft 22 and a radially-outward facing surface 29 of runner 16 to ensure that seal ring 12 does not "bottom out" or contact spacer 18 as a result of radial motion between inner shaft 20 and outer shaft 22.

Seal ring 12 has a radially-outward-facing surface 25. In some embodiments, seal ring 12 is segmented, or formed from overlapping seal ring segments which together form an annular seal ring 12. In other embodiments, seal ring 12 is a continuous annular ring. In some embodiments seal ring 12 is formed from a carbon-graphite material. Such material has a reasonably low density, low friction, and low modulus of elasticity. For example, the coefficient of friction between a carbon-graphite seal ring 12 and a steel retaining arm 14 is anticipated between 0.2 and 0.4 depending on temperature and other operating conditions.

In other embodiments seal ring 12 is formed from materials having a higher stiffness such as carbon-carbon composite or ceramic. In an embodiment with seal ring 12 formed from ceramic, for example, the coefficient of friction between the ceramic seal ring 12 and steal retaining arm 14 is anticipated between 0.4 and 0.8 depending on temperature and other operating conditions. Therefore a lubricious or low-friction coating applied to a ceramic seal ring 12 would provide a greater benefit than a lubricious or low-friction coating applied to a carbon-graphite seal ring 12. However, a lubricious coating as contemplated in this disclosure may be applied to a seal ring 12 formed of any material, with beneficial results.

Assembly 100 divides a high pressure fluid cavity 30 from a low pressure fluid cavity 32. When inner shaft 20 and outer shaft 22 are not rotating, a small gap may be present between the outer surface 25 of seal ring 12 and the inner surface 27 of outer shaft 22. As inner shaft 20 begins to rotate, runners 16, spacer 18, and seal ring 12 will initially rotate with inner shaft 20. Centrifugal forces will act on seal ring 12 in a radially outward direction to effect engagement between surface 25 of seal ring 12 and surface 27 of outer shaft 22. Once surface 25 is engaged with surface 27, seal ring 12 will begin to rotate with outer shaft 22.

In some embodiments oil cooling and/or lubrication is provided to the interior of inner shaft 20 and/or the outer diameter of retaining arm 14. In certain operating conditions the differential pressure across seal ring 12 will force seal ring 12 against a downstream or low pressure side runner 16 and the seal ring 12 will rotate with outer shaft 22 but at an intermediate speed between the speed of inner shaft 20 and outer shaft 22. As a result, heat generation by the seal ring 12 is divided between the downstream runner 16 and the surface 27 of outer shaft 22. Such divided heat generation may result in lower overall heat generation and/or a beneficial heat generation in components or regions that are subject to greater cooling capacity. For example, lubricant mist may be present in the bearing chamber which would cool downstream runner 16 and surface 27. Similarly, active cooling in the form of lubricant application may be applied to retaining arm 14. The reduction and/or improved removal of heat generated during operation may decrease the wear rate of seal ring 12 and interfacing components.

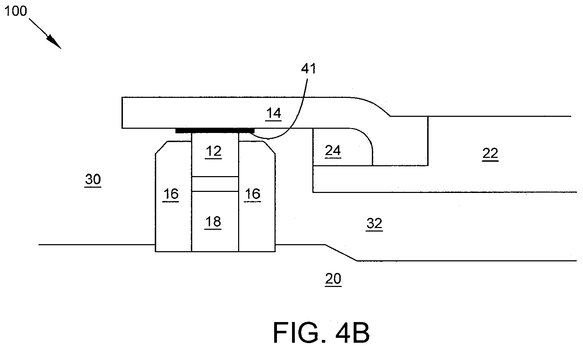

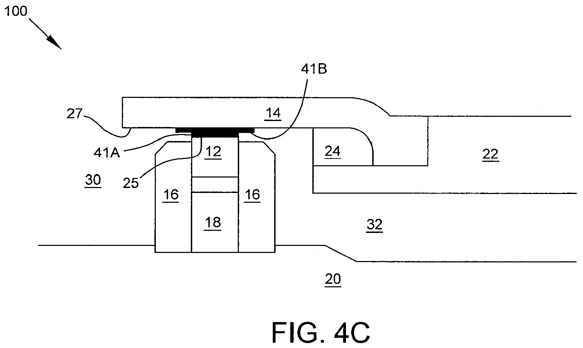

In some embodiments a lubricious coating 41 is applied to the interface between the seal ring 12 and the retaining arm 14. More specifically, in some embodiments the lubricious coating 41 may be applied to one or both of the outer surface 25 of seal ring 12 and the inner surface 27 of retaining arm 14. Figures 4A, 4B, and 4C illustrate such embodiments. The effect of applying a lubricious coating 41 at the seal ring to retaining arm interface is to reduce the coefficient of friction between seal ring 12 and outer shaft 22. With a lower coefficient of friction between the seal ring 12 and outer shaft 22, a smaller magnitude of axial force will result in axial movement of seal ring 12, thus resulting in a reduced wear rate from rub between seal ring 12 and one or both runners 16. The relatively low relative motion and relative velocity between the seal ring 12 and outer shaft 22 is likely to result in a reasonably life expectancy of the coating 41.

In some embodiments a lubricous coating 41 is applied to the outer surface 25 of seal ring 12. Figure 4A is a depiction of such an embodiment. In some embodiments, the lubricious coating 41 is applied only to the outer surface 25.

In some embodiments a lubricous coating 41 is applied to the inner surface 27 of retaining arm 14. Figure 4B is a depiction of such an embodiment. In some embodiments, the lubricious coating 41 is applied only to the inner surface 27.

In some embodiments a lubricous coating 41 is applied to both the outer surface 25 of seal ring 12 and the inner surface 27 of retaining arm 14. Figure 4C is a depiction of such an embodiment. The lubricious coating applied to outer surface 25 is labeled 41A, and the lubricious coating applied to inner surface 27 is labeled 41B.

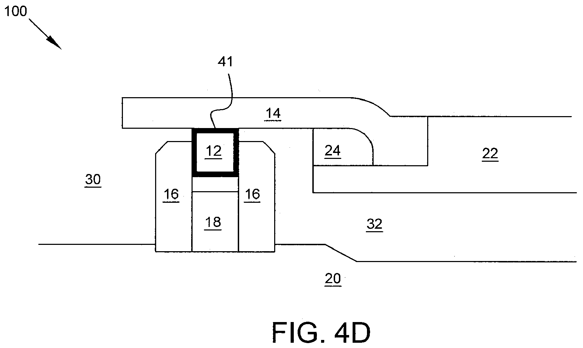

In some embodiments a lubricious coating is applied to the interface between the seal ring 12 and runners 16, or to both the interface between the seal ring 12 and retaining arm 14 and the interface between the seal ring 12 and runners 16. Figure 4D is a depiction of such an embodiment. More specifically, in Figure 4D the seal ring 12 has a lubricious coating 41 applied to all external surfaces. The effect of such an application is to reduce the coefficient of friction between the seal ring 12 and retaining arm 14, and also to reduce the coefficient of friction between the seal ring 12 and runners 16. Such reductions to the coefficient of friction result in reduced heat generation and reduced wear rates between components of assembly 100.

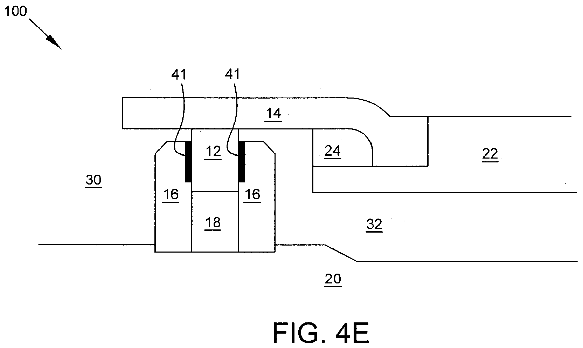

Figure 4E is a depiction of an embodiment wherein the lubricious coating 41 is applied only to the interface between seal ring 12 and runner 16, and more specifically the coating 41 is applied to the inner facing surfaces 17 of runners 16. The effect of such an application is to reduce the coefficient of friction between the seal ring 12 and runners 16, and thus to reduce heat generation and wear rates between seal ring 12 and runners 16.

Lubricious coating 41 may be optimized to the specific design of the assembly 100 based on a number of factors such as operating temperatures, rotational speeds, and other operating conditions. Lubricious coating 41 may be formed by one or more of the following: graphite, carbon-graphite, molybdenum disulphate, boron nitride, PTFE, and similar friction-reducing materials and compounds. Lubricious coating 41 may be applied to seal ring 12 by thermal spray, PVD, CVD, painting, or similar application means. Although a coefficient of friction will vary with material grade, temperature, and environmental effects, the use of a carbon-graphite lubricious coating would be expected to deliver a coefficient of friction of 0.2 to 0.25 against a steel shaft surface without lubricant. Similar contact between a lubricious coating made of ceramic and a steel shaft would yield a coefficient of friction of approximately 0.4. In general, the coefficient of friction will decrease asymptotically with velociate and increase with temperature.

In the embodiment of Figure 4A, lubricious coating 41 is not applied to surfaces of seal ring 12 other than outer surface 25. Since any lubricous coating applied to the interface between the seal ring 12 and runner 16 is likely to have a high wear rate and therefore a short coating life, the embodiment depicted in Figure 4A may be the most economical application of the lubricous coating 41.

Application of lubricious coating 41 to one or more surfaces as described above with reference to Figures 4A through 4E would prolong the life of seal ring 12 and other seal assembly components by further mitigating heat generation, friction, and wear rates between components. More specifically, the application of a lubricious coating to the interface between the seal ring 12 and outer shaft 22 will reduce the axial force required to move seal ring 12, and thus will reduce wear between runners 16 and seal ring 12.

The positive effects of the lubricious coating may be factored into design calculations for the assembly 100 to ensure that the force required to move the seal ring 12 in an axial direction will exceed the axial force caused by differential pressure across the seal ring 12. In other words, it is to be expected that seal assembly 100 will be designed such that the force of differential pressure acting on seal ring 12 is alone insufficient to cause axial motion of seal ring 12.

The present disclosure is additionally directed to methods of sealing a high pressure fluid cavity from a low pressure fluid cavity. In some embodiment, a method of sealing comprises implementing the sealing assembly disclosed above. In some embodiments, a method of sealing comprises rotating inner shaft 20 to effect rotation of runners 16 and seal ring 12. The rotation of seal ring 12 causes radially outward movement of the seal ring 12 under centrifugal force, thus effecting engagement of radially outward facing surface 25 and inner surface 27 of outer shaft 22. In some embodiments seal ring 12 has a lubricious coating of radially outward facing surface 25, such that the coefficient of friction between radially outward facing surface 25 and inner surface 27 is never greater than 0.4 at the maximum rotational speed of the seal ring 12.

Although the disclosed reduced friction intershaft seal assembly 100 is discussed with reference to a two-shaft turbine engine, one of skill in the art would understand that applications of the disclosed assembly 100 are not so limited. For example, the disclosed assembly 100 can be applied to turbine engines having multiple stages and multiple (three or more) shafts. The disclosed assembly 100 can be used to isolate high and low pressure spaces between each set of shafts.

The present application discloses one or more of the features recited in the appended claims and/or the following features which, alone or in any combination, may comprise patentable subject matter.

Although examples are illustrated and described herein, embodiments are nevertheless not limited to the details shown, since various modifications and structural changes may be made therein by those of ordinary skill within the scope and range of equivalents of the claims.

## Claims

1. A seal assembly (10) for sealing a high pressure fluid cavity (30) from a low pressure fluid cavity (32), said cavities at least partially disposed between a hollow rotating shaft (22) and a co-axial rotating shaft (20) at least partially disposed within the hollow rotating shaft, the seal assembly (10) comprising:
a pair of annular axially-spaced runners (16) carried by an outer surface of said co-axial rotating shaft, each of said runners having an axially-facing radially-extending side surface opposing an axially-facing radially-extending side surface of the other runner;
an annular seal ring (12) positioned axially between said opposing side surfaces of said runners, said annular seal ring having a radially-outward facing surface frictionally engaged with a surface rotating with the hollow rotating shaft; and
a lubricious coating disposed between said radially outward facing surface of said annular seal ring and said surface rotating with the hollow rotating shaft to effect a coefficient of friction between said surfaces no greater than 0.4 at the maximum rotational speed of said annular seal ring.

2. The seal assembly (10) of Claim 1 wherein said lubricious coating comprises one or more of graphite, molybdenum disulphate, boron nitride, or PTFE.

3. The seal assembly (10) of Claim 1 or Claim 2 wherein said seal ring comprises carbon-graphite or ceramic.

4. The seal assembly (10) of any of Claim 1 to Claim 3, wherein said coefficient of friction is no greater than 0.2 at the maximum rotational speed of said annular seal ring.

5. The seal assembly (10) of any preceding claim wherein said hollow rotating shaft and said co-axial rotating shaft are counter-rotating or co-rotating .

6. The seal assembly (10) of any preceding claim wherein said surface rotating with the hollow rotating shaft is a radially-inward-facing surface of an annular retaining arm carried by said hollow rotating shaft.

7. The seal assembly (10) of any preceding claim wherein said co-axial rotating shaft is connected to at least one of a plurality of fan blades, a plurality of compressor blades, or a plurality of turbine blades.

8. The seal assembly (10) of any preceding claim wherein the hollow rotating shaft comprises steel.

9. A method for sealing a high pressure fluid cavity (30) from a low pressure fluid cavity (32), said cavities at least partially disposed between a hollow rotating shaft (22) and a co-axial rotating shaft (20) at least partially disposed within the hollow rotating shaft, the method comprising:
rotating the co-axial rotating shaft that carries a pair of annular axially-spaced runners (16) and an annular seal ring (12) disposed axially between the runners to effect engagement of a radially-outward facing surface of the annular seal ring with a surface of the hollow rotating shaft; and
disposing a lubricious coating between the radially-outward facing surface and the surface rotating with the hollow rotating shaft such that the coefficient of friction is never greater than 0.4 at the maximum rotational speed of said annular seal ring.

10. The method of Claim 9 wherein the co-axial rotating shaft is rotated in a first rotational direction and the hollow shaft is rotated in a second rotational direction.

11. The method of Claim 9 wherein the co-axial rotating shaft and the hollow shaft are rotated in the same rotational direction.

12. The method of any of Claim9 to Claim11 wherein the lubricious coating is formed of one or more of graphite, molybdenum disulphate, boron nitride, and PTFE.

13. The method of Claim 12 wherein the seal ring comprises carbon-graphite and the lubricious coating comprises molybdenum disulphate.

14. The method of Claim 12 wherein the seal ring comprises ceramic and the lubricious coating comprises graphite.

15. The method of any of Claim 9 ro Claim 14 wherein the coefficient of friction is never greater than 0.2 at the maximum rotational speed of said annular seal ring.
